# EUROPEAN PATENT APPLICATION

(11) **EP 2 677 613 A1**
(43) Date of publication of application: **25.12.2013**
(21) Application number: 12747348.6
(22) Date of filing: 15.02.2012
(51) Int. Cl.: H02G 3/04, B60R 16/02, H02G 3/22, H02G 11/00

(54) **HARNESS COVER FOR VEHICLE DOOR**

(30) Priority: 16.02.2011 JP 2011030967
(71) Applicant: Toyota Shatai Kabushiki Kaisha, Kariya-shi, Aichi 448-0002 (JP); Furukawa Electric Co., Ltd., Chiyoda-ku Tokyo 100-8322 (JP); Furukawa Automotive Systems Inc., Inukami-gun, Shiga 522-0242 (JP)
(72) Inventor: INAGAKI Nobuhisa, Kariya-shi Aichi 448-0002 (JP); KOJIMA Kouichiro, Kariya-shi Aichi 448-0002 (JP); IKETANI Nobuyasu, Inukami-gun Shiga 522-0242 (JP); KAWASAKI Takashi, Inukami-gun Shiga 522-0242 (JP)
(74) Representative: Chettle, Adrian John
(86) International application number: PCT/JP2012/053505
(87) International publication number: WO 2012/111696

(57) **Abstract**

It is an object of the present invention to provide a structure for installing wiring harnesses between a vehicle body and clamshell doors of a vehicle, in which in a situation where a sufficient difference in height cannot be formed between grommet holes and that bellows-shaped portions of harness covers can be expanded and contracted such that the wiring harnesses can be displaced following door opening and closing motion, the deformation, e.g., the crushing, of the bellows-shaped portion at a time when the bellows-shaped portion is extended to a maximum can be prevented, so as to adapt to a large opening angle of the doors.

A set number of and a height of angled portions of a bellows-shaped portion of a harness cover (20) positioned between a pillar (15) of a vehicle body and a door (11) are determined such that when the bellows-shaped portion is extended to its maximum, a spread angle of each angled portion creates an acute angle.

## Description

### TECHNICAL FIELD

The present invention relates to harness covers that are used for installing wiring harnesses between vehicle doors and a vehicle body.

### BACKGROUND ART

In clamshell doors (double swing doors) formed in a rear portion of a vehicle such as a freight vehicle, wiring harnesses (bundles of electric wires) may be installed between the doors and a vehicle body in order to supply electric power to an illumination device, a washer fluid injection pump or other such devices attached to the doors. Generally, the wiring harnesses may be disposed between the doors and the vehicle body while they are respectively sheathed in cylindrical harness covers. Each of the harness covers may have a body-side grommet attached to one end thereof and a door-side grommet attached to the other end thereof. The body-side grommet may be configured to be connected to one of grommet holes formed in a rear end surface of the vehicle body. Conversely, the door-side grommet may be configured to be connected to a grommet hole formed in a rotational base end surface of each of the doors.
Conventionally, the wiring harnesses including the harness covers have been variously designed such that they can be prevented from being caught between the doors and the vehicle body in a condition in which the doors are closed. They have also been designed such that they cannot be pulled by force between the doors and the vehicle body when the doors are being opened or in a condition in which the doors are opened. For example, Patent Document 1 described below teaches such a technique. In this technique, in a situation where a sufficient difference in height can be formed between the body-side grommet hole and the door-side grommet hole, a vertical axis portion extending along a door opening and closing axis may be formed in each of the harness covers and each of the wiring harnesses. Further, the vertical axis portion may be twisted about the door opening and closing axis, so that when the doors are opened and closed, the wiring harnesses and the harness covers can be displaced following door opening and closing movements without being subjected to an excessive force. Further, Patent Document 2 described below teaches a technique used as a measure applicable in a situation where, unlike the above, a sufficient difference in height cannot be formed between the body-side grommet hole and the door-side grommet hole. In this technique, a bellows-shaped portion may be formed in each of the harness covers between the body-side grommet and the door-side grommet, so as to be expanded and contracted when the doors are opened and closed.

### PRIOR ART DOCUMENT

### PATENT DOCUMENT

Patent Document 1: Japanese Laid-Open Patent Publication No. 2001-151043
Patent Document 2: Japanese Laid-Open Patent Publication No. 2000-217229

### SUMMARY OF THE INVENTION

### PROBLEMS TO BE SOLVED BY THE INVENTION

However, in the latter structure in which the bellows-shaped portion is formed in each of the harness covers so as to adapt to the door opening and closing motion, an extension and contraction distance of the bellows-shaped portion can be increased as a door opening and closing angle is increased. This may, however, cause a problem. That is, when the doors are fully opened, the bellows-shaped portion may be fully stretched, so that angle portions of the bellows-shaped portion may be deformed. As a result, the bellows-shaped portion cannot be smoothly and securely expanded and contracted. For example, when the doors are closed, the bellows-shaped portion cannot be smoothly folded.
It is an object of the present invention to provide a structure for installing wiring harnesses between a vehicle body and doors using harness covers each of which has a bellows-shaped portion positioned between a body-side grommet and a door-side grommet attached thereto, in which the bellows-shaped portion can be smoothly and securely expanded and contracted even if a door opening and closing angle is increased.

### MEANS FOR SOLVING THE PROBLEMS

The problem described above can be solved by the invention described below.
A first invention may provide a harness cover covering a wiring harness between a vehicle body and a door and having a cylindrical shape that is configured to accommodate the wiring harness on an inner circumferential side thereof, which may include a door-side grommet attached to one end thereof and capable of being connected to a grommet hole formed in the door, a body-side grommet attached to the other end thereof and capable of being connected to a grommet hole formed in vehicle body, and a bellows-shaped portion positioned between the body-side grommet and the door-side grommet. A number of and a height of angled portions of the bellows-shaped portion are determined such that when the bellows-shaped portion is extended to its maximal point at a time when the door is opened, a spread angle of each angled portion creates an acute angle.
According to the first invention, the wiring harness is installed between the vehicle body and the door while it passes through an inner circumferential side of the harness cover. The harness cover has the bellows-shaped portion positioned between the body-side grommet and the door-side grommet. Therefore, even when a large difference in height cannot be formed between the body-side grommet hole to which the body-side grommet is connected and the door-side grommet hole to which the door-side grommet is connected, the bellows-shaped portion can be laterally extended and contracted following the opening and closing motion of the door while the wiring harness positioned in the inner circumferential side of the bellows-shaped portion can be introduced into and withdrawn from the body or the door. As a result, the wiring harness can be installed in a condition in which opening and closing motion of the door cannot be prevented and in which the wiring harness and the harness cover can be prevented from being caught between the body and the door.
Further, when the bellows-shaped portion is extended to a maximum, the spread angle of each angled portion of the bellows-shaped portion forms an acute angle (an angle smaller than 90 degrees). Therefore, deformation (e.g., crushing of the angled portions) of the bellows-shaped portion can be effectively prevented when the bellows-shaped portion is extended, so that the angled portions can be securely folded and contracted when the door is closed. Thus, the bellows-shaped portion of the harness cover can be reliably extended and contracted following the opening and closing motion of the back door. Therefore, the harness cover can be applied to a vehicle door, e.g., a clamshell vehicle door that can be widely opened, in which a large difference in height cannot be formed between the body-side grommet hole and the door-side grommet hole, in order to install the wiring harness thereto.
The second invention corresponds to the harness cover of the first invention in which a surface of each angled portion of the bellows-shaped portion is subjected to a surface texturing treatment. According to the second invention, even when the angled portions of the bellows-shaped portion are folded and contact each other at a time when the door is closed, the angled portions can be prevented from being stuck to each other because an area of contact between the angled portions can be reduced due to the surface texturing treatment. As a result, smooth extension of the bellows-shaped portion can be ensured when the door is opened.
The third invention may provide a structure for installing a wiring harness between a vehicle body and a door using the harness cover of the first or second invention. According to the third invention, even when a large difference in height cannot be formed between the body-side grommet hole to which the body-side grommet is connected and the door-side grommet hole to which the door-side grommet is connected, the bellows-shaped portion can be laterally extended and contracted following the opening and closing motion of the door while the wiring harness positioned in the inner circumferential side of the bellows-shaped portion can be introduced into and withdrawn from the body or the door. As a result, the wiring harness can be installed in a condition in which opening and closing motion of the door cannot be prevented and in which the wiring harness and the harness cover can be prevented from being caught between the body and the door.

### BRIEF DESCRIPTION OF THE DRAWINGS

FIG. 1 is a rear view of a vehicle and vehicle doors having harness covers according to an embodiment of the present invention. This figure shows a condition in which the clamshell doors are opened.
FIG. 2 is a perspective view of one of wiring harness installing portions that are positioned between the vehicle body and the doors in which wiring harnesses are installed using the harness covers according to the embodiment of the present invention. In this figure, hinges are omitted.
FIG. 3 is transverse cross-sectional view of one of the wiring harness installing portions in a condition in which the doors are closed. Reference symbols C and CL shown in this figure respectively correspond to a hinge center and a rear combination lamp.
FIG. 4 is transverse cross-sectional view of one of the wiring harness installing portions in a condition in which the doors are opened. Reference symbols C and CL shown in this figure respectively correspond to the hinge center and the rear combination lamp.
FIG. 5 is a schematic view of a bellows-shaped portion formed in one of the harness covers, which view is a vertical cross-sectional view of angle portions thereof.
FIG. 6 is a vertical cross-sectional view of the bellows-shaped portion formed in one of the harness covers.
FIG. 7 is an enlarged view of a portion (VII) shown in FIG. 6, which view is a cross-sectional view of the angle portions that are subjected to a surface texturing treatment.

### MODE FOR CARRYING OUT THE INVENTION

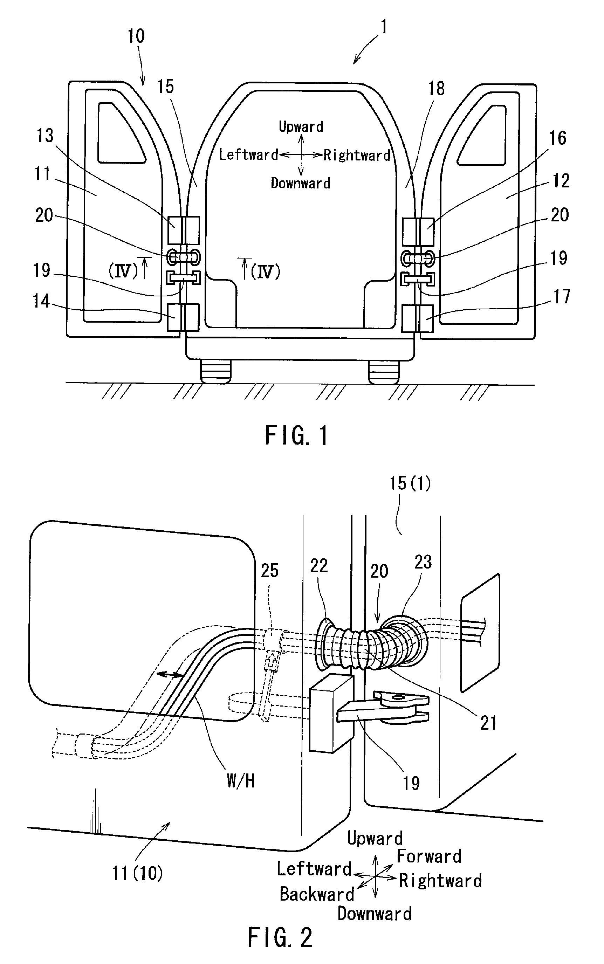

In the following, an embodiment of the present invention will be described with reference to FIGS. 1 to 7. FIG. 1 shows a rear portion of a vehicle 1 having vehicle doors 10 according to the present embodiment. As shown in the drawings, in the present embodiment, so-called clamshell back doors in which right and left doors 11 and 12 can respectively be laterally opened are exemplified as the vehicle doors 10. The left door 11 may be rotatably supported on a left pillar 15 of a vehicle body via hinges 13 and 14. Conversely, the right door 12 is rotatably supported on a right pillar 18 of the vehicle body via hinges 16 and 17. In the present embodiment, outer hinges (hinges of which hinge centers C functioning as rotation centers of the doors are positioned outside the doors) may respectively be used as the hinges 13, 14, 16 and 17. Thus, each of the right and left doors 11 and 12 may have an opening and closing angle greater than if inner hinges are used.
Further, door check arms 19 are respectively bridged between the left door 11 and the left pillar 15 and between the right door 12 and the right pillar 18. The door check arms 19 may respectively be retracted into and projected from the right and left pillars 15 and 18 with opening and closing motion of the right and left doors 11 and 12, so as to function to maintain the right and left doors 11 and 12 in a half-open position and a fully-open position. In the present embodiment, known door check arms may be used.
Wiring harnesses W/H are respectively installed between the right and left doors 11 and 12 and the right and left pillars 15 and 18 via harness covers 20. In the present embodiment, washer fluid hoses are respectively installed between the right and left doors 11 and 12 and the vehicle body together with the wiring harnesses W/H via the harness covers 20. The wiring harnesses W/H as referred to in the following description may include the washer fluid hoses.
The present embodiment is characterized by the above-described harness covers 20. Installing structures of the wiring harnesses W/H and the harness covers 20 in the right and left doors 11 and 12 may respectively have the same construction as each other. Therefore, as shown in FIG. 2, the following description will be directed to the left door 11.

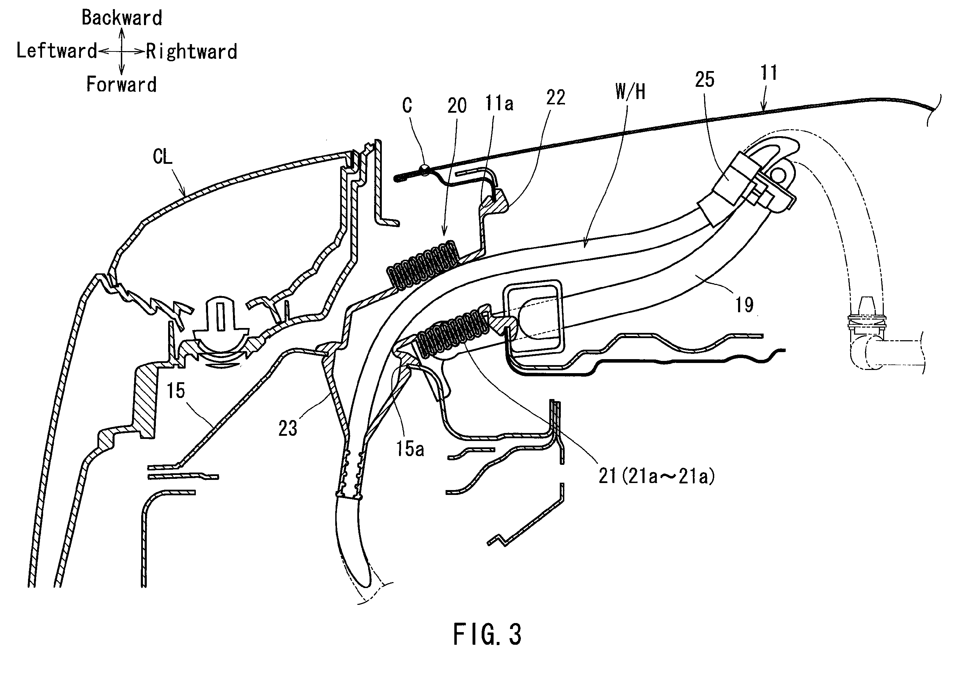

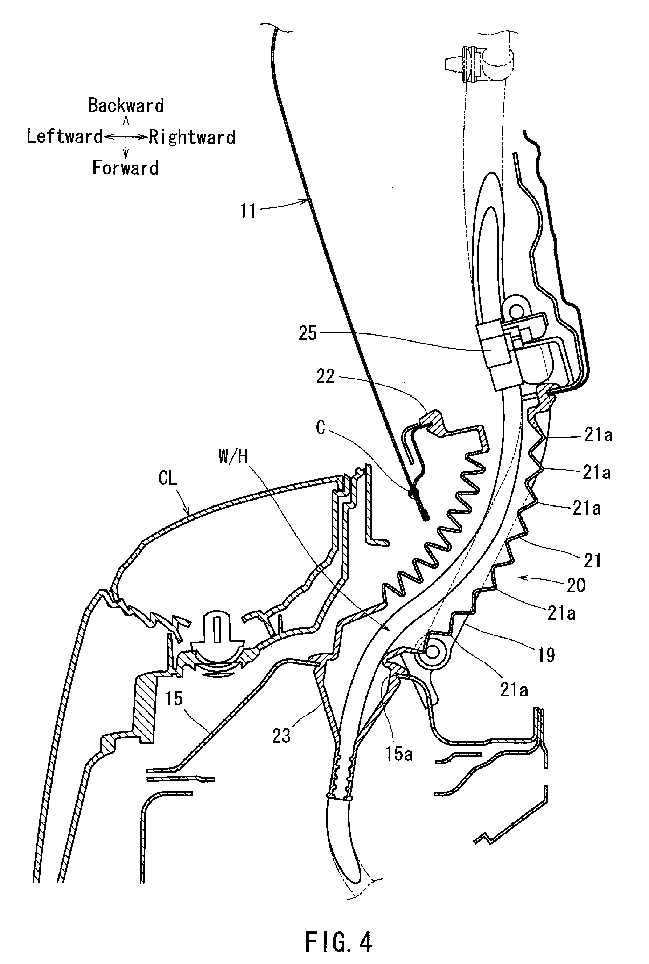

The wiring harness W/H may be positioned above the door check arm 19 and may be bridged between the left door 11 and the left pillar 15 of the vehicle body. The wiring harness W/H is a bundle of electric wires that is used to supply electric power from the vehicle body to, for example, a wiper motor disposed in the left door 11. The wiring harness W/H may be installed between the left pillar 15 and the left door 11 passing through an inner circumferential side of the harness cover 20 of the present embodiment, which will be hereinafter described.
The harness cover 20 may have a door-side grommet 22 attached to one end of a cylindrical bellows-shaped portion 21 thereof and a body-side grommet 23 attached to the other end of the bellows-shaped portion 21. The harness cover 20 may be made of synthetic rubber and may have a substantially cylindrical shape. The door-side grommet 22 may be connected to a grommet hole 11a formed in the left door 11. Conversely, the body-side grommet 23 may be connected to a grommet hole 15a formed in the left pillar 15. Thus, the harness cover 20 may be attached to a rotational base end surface of the left door 11 and a rear end surface of the left pillar 15 so as to extend therebetween. The wiring harness W/H may be movably positioned on the inner circumferential side of the harness cover 20.
Thus, as shown in FIG. 3, in a condition in which the left door 11 is closed, the bellows-shaped portion 21 of the harness cover 20 can be folded (contracted). To the contrary, as shown in FIG. 4, in a condition in which the left door 11 is opened, the bellows-shaped portion 21 of the harness cover 20 can be elongated (extended).
The wiring harness W/H may be introduced into an inner side of the left door 11 via an inner circumferential side of the door-side grommet 22 and the grommet holes 11 a. The wiring harness W/H may be held by a clamp 25 in the inner side the left door 11. The clamp 25 may be connected to the door check arm 19. Thus, when the door check arm 19 is retracted into and projected from an interior portion of the left door 11 in response to the opening and closing motion of the left door 11, the wiring harness W/H can be displaced integrally with the door check arm 19 via the clamp 25. As a result, an excess length of the wiring harness W/H adaptable to the opening and closing motion of the left door 11 can be retracted into the interior portion of the left door 11, so that the wiring harness W/H can be prevented from flexing or slacking within the harness cover 20.

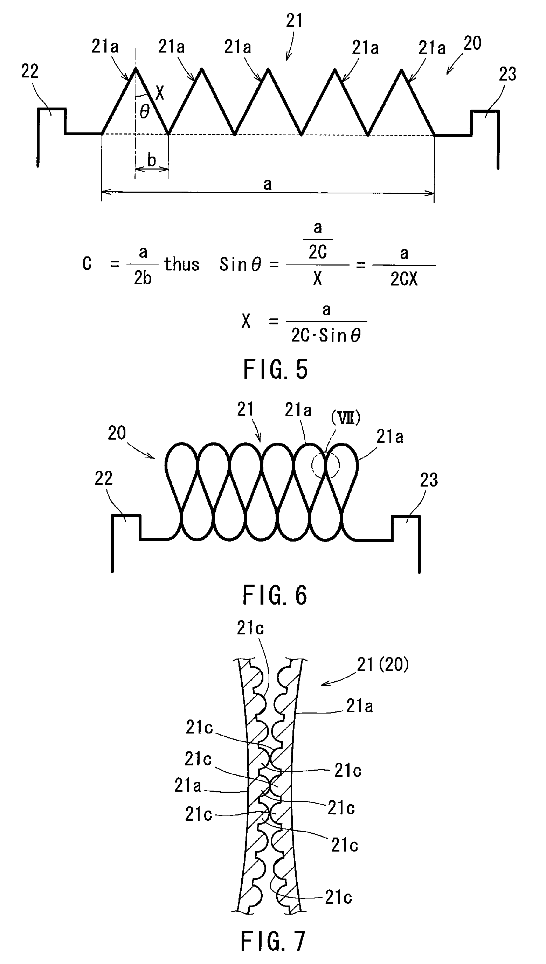

The bellows-shaped portion 21 of the harness cover 20 may be designed so as to assuredly be expanded and contracted when the door is opened and closed. As shown in FIG. 5, the bellows-shaped portion 21 may include a plurality of cross-sectionally angle-shaped (inverted V-shaped) angled portions 21a-21a that are connected in series. In particular, in order to prevent deformation (e.g., crushing) other than extension of the bellows-shaped portion 21 at a time when the door is opened, a relationship between a set number C and a height X (a height in a folded condition) of the angled portions 21a-21a may be determined by the conditions described below. Thus, each angled portion 21 a may be configured so as to have an acute angle (0° < 2 *θ* ≦ 90° ) (so as to not have an obtuse angle) even at a time when the door is fully opened.
In FIG. 5, when a length a is given as an extension length of the bellows-shaped portion 21 at the time when the door is fully opened, an equation [C = a / (2b)] may hold true. Therefore, an equation [Sin *θ* = b / X = a / (2CX)] may hold true. As a result, an equation [X = a / (2C • Sin *θ* )] can be obtained.
From this, when a spread angle of each angled portion 21a at a time when the door is fully opened is taken as, for example, 90 degrees, and the set number C of the angled portions 21a is taken as, for example, five, as shown in the drawing ( *θ* = 45 degrees; C = 5), the height X of each angled portion 21a can be set to approximately (a / 7).
Thus, with respect to the extension length a of the bellows-shaped portion 21 at the time when the door is fully opened, the set number C and the height X of the angled portions 21 a of the bellows-shaped portion 21 may be appropriately determined by the conditions described above. Therefore, the spread angle of each angled portion 21 a of the bellows-shaped portion 21 at the time when the door is fully opened can be set to an angle not greater than 90 degrees.
Because the spread angle of each angled portion 21 a can create an acute angle (an angle not greater than 90 degrees), the deformation, principally the crushing, of each angled portion 21 a can be prevented even when an external force or an impact is laterally applied thereto. Thus, the crushing, or other such deformation, of each angled portion 21a can be prevented at the time when the door is fully opened. Therefore, when the left door 11 is closed after it is fully opened over a large angle, the bellows-shaped portion 21 can be securely folded, so that the wiring harness W/H can be smoothly introduced into the left door 11 following the closing of the door. As a result, in a closed condition of the left door 11, it is possible to prevent a trouble such as that the wiring harness W/H and the harness cover 20 are caught between the left door 11 and the left pillar 15.

Next, as shown in FIGS. 6 and 7, each angled portion 21a of the bellows-shaped portion 21 may be subjected to a so-called surface texturing treatment, so as to have many projections 21c-21c formed on a surface thereof. Thus, because the surface is subjected to the surface texturing treatment, even when the bellows-shaped portion 21 is strongly compressed in the closed condition of the door, an area of contact between the angled portions 21a-21a adjacent to each other can be reduced. Thus, even when the back doors 10 are left in a closed condition for a long period of time under a high-temperature environment, the angled portions 21 a-21 a can be prevented from being stuck to each other. Therefore, when the doors are then opened, the bellows-shaped portion 21 can be smoothly extended. As a result, the wiring harness W/H can be smoothly moves following the movement of the door while the harness cover 20 can be prevented from being damaged.

According to the harness cover 20 of the present embodiment thus constructed, the set number of the angled portions 21 a-21 a of the bellows-shaped portion 21 and the height of each angled portion 21a may be appropriately set with respect to the required extension length a corresponding to an opening angle of the back doors 10. Thus, when the bellows-shaped portion 21 is extended to its maximum at the time when the door is fully opened, the spread angle of each angled portion 21a creates an acute angle not greater than 90 degrees. Therefore, the deformation, principally the crushing, of each angled portion 21 a can be prevented when the doors are opened, so that the bellows-shaped portion 21 can be smoothly folded when the doors are then closed. As a result, the wiring harness W/H can be smoothly moved following the movement of the doors without producing the trouble such as that the wiring harness W/H are caught between the doors and the vehicle body.
Thus, even if the back doors 10 are opened and closed over a large angle, the deformation, e.g., the crushing, of the bellows-shaped portion 21 can be prevented. Therefore, in the vehicle 1 in which the opening and closing angle of the back doors 10 is widened due to the hinges 13-17, even when a sufficient difference in height cannot be formed between the door-side grommet hole and the body-side grommet hole, the wiring harness W/H can be smoothly moved following the opening and closing motion of the back doors 10 by using the harness cover 20 shown therein. Also, it is not necessary to use the conventional installing structure of the wiring harness W/H and the harness cover in which a vertical axis portion is formed in the wiring harness W/H and the harness cover and in which the vertical axis portion is twisted thereabout.
Further, the bellows-shaped portion 21 of the harness cover 20 is subjected to the so-called surface texturing treatment as a measure for when the door is closed, so that the many projections 21c-21c can be formed on the surface of each angled portion 21a. Therefore, at the time when the door is closed, the area of contact between the angled portions 21a-21a adjacent to each other can be reduced, so that the angled portions 21a-21a can be prevented from being stuck to each other. As a result, the bellows-shaped portion 21 can be prevented from being damaged, so as to be increased in durability. In addition, smooth extension of the bellows-shaped portion 21 can be ensured, so that the wiring harness W/H can further assuredly move following the door opening motion.
Further, in an interior portion of each of the right and left doors 11 and 12, the clamp 25 holding the wiring harness W/H may be connected to the door check arm 19. Therefore, the wiring harness W/H can be integrally displaced with the door check arm 19 in response to the opening and closing motion of each door. In this point, also, the wiring harness W/H can be further securely moved following the opening and closing motion of the back doors 10.

Further, the embodiment described above can be variously modified. For example, although the clamshell back doors 10 are exemplified in the description, the present invention can be applied to a single swing back door or a hatch-type back door. Further, the harness cover 20 can be used in a horizontally or vertically rotatable front or side door. In such a case, the same functions and effects can be obtained.
Further, as shown in FIG. 5, in an example, the set number C of the angled portions 21a is taken as five, and the maximum spread angle (2 *θ* ) of each angled portion 21a is taken as 90 degrees. However, the maximum spread angle can be taken as approximately 45 degrees. In essence, with respect to the maximum extension length a of the bellows-shaped portion 21 required for the maximum opening angle of each of the clamshell back doors 10, the set number C of the angled portions 21a and the height X and the maximum spread angle (2*θ*) of each angled portion 21a can be arbitrarily determined by the exemplified conditions.
Further, the surface texturing treatment applied to each angled portion 21 a of the bellows-shaped portion 21 can be omitted.
Further, the clamp 25 can be omitted such that the wiring harness W/H can be displaced independently of the door check arm 19 in the door.

## Claims

1. A harness cover covering a wiring harness between a vehicle body and a door and having a cylindrical shape that is configured to accommodate the wiring harness on an inner circumferential side thereof, comprising:
a door-side grommet attached to one end thereof and capable of being connected to a grommet hole formed in the door, a body-side grommet attached to the other end thereof and capable of being connected to a grommet hole formed in vehicle body, and a bellows-shaped portion positioned between the body-side grommet and the door-side grommet,
wherein a set number of and a height of angled portions of the bellows-shaped portion are determined such that when the bellows-shaped portion is extended to a maximum at a time when the door is opened, a spread angle of each angled portion creates an acute angle.

2. The harness cover as defined in claim 1, wherein a surface of each angled portion of the bellows-shaped portion is subjected to surface texturing treatment.

3. A structure for installing a wiring harness between a vehicle body and a door using the harness cover as defined in claim 1 or 2.
